Europäisches Patentamt

European Patent Office

Office européen des brevets

(11) Publication number: **0 076 061**
**B1**

# (12) EUROPEAN PATENT SPECIFICATION

(45) Date of publication of patent specification: **03.07.85**

(21) Application number: **82304857.4**

(22) Date of filing: **15.09.82**

(51) Int. Cl.⁴: **G 11 B 17/04, G 11 B 19/16**

(54) Apparatus for loading a disc on a turntable.

(30) Priority: **18.09.81 JP 146295/81**

(43) Date of publication of application:
**06.04.83 Bulletin 83/14**

(45) Publication of the grant of the patent:
**03.07.85 Bulletin 85/27**

(84) Designated Contracting States:
**DE FR GB NL**

(56) References cited:
**FR-A-1 519 381**
**GB-A-2 088 615**
**US-A-3 488 059**
**US-A-3 561 768**

**PATENTS ABSTRACTS OF JAPAN, vol. 3, no.
61, 26th May 1979, page 151 E 113;**

(73) Proprietor: **Kabushiki Kaisha Toshiba
72, Horikawa-cho Saiwai-ku
Kawasaki-shi Kanagawa-ken 210 (JP)**

(72) Inventor: **Izumi, Yutaka c/o Patent Division
Tokyo Shibaura Denki K.K. 72, Horikawa-cho
Saiwai-ku Kawasaki-shi Kanagawa-ken 210 (JP)**
Inventor: **Kawakami, Hiroshi c/o Patent Division
Tokyo Shibaura Denki K.K. 72, Horikawa-cho
Saiwai-ku Kawasaki-shi Kanagawa-ken 210 (JP)**

(74) Representative: **Newstead, Michael John et al
Haseltine Lake & Co. 28 Southampton Buildings
Chancery Lane
London, WC2A 1AT (GB)**

Courier Press, Leamington Spa, England.

## Description

The present invention relates to an apparatus for loading a disc, such as a photograph record disc, a video record disc, a digital audio record disc or a magnetic record disc, on a turntable.

As prior art, there can be mentioned United States Patents Nos. 3 488 059 and 3 561 768 and French Patent Specification No. 1 519 381. If the apparatus described in US—A—3 561 768 is used the surface of the disc may be damaged during its introduction by slipping with a loffer member.

Recently, a PCM (pulse code modulation) technique has been developed and applied to a recording or reproducing system for both video discs and for audio discs. A recording of a PCM signal on to or off a disc is done optically or electrostatically.

In reproducing the PCM signal from a disc, optical pick-ups or electrostatic pick-ups are used to follow the recorded track of the disc while it is rotated at a very high speed.

As is known, such discs are sensitive to scratches and dust because signals are recorded very densely on the discs, and therefore it is recommended to handle them carefully. On the other hand, an easy handling of the discs is desired by users.

For solving the above demands, many disc loading apparatus, carrying discs manually or automatically on to or from turntables, have been developed. Conventional disc loading apparatus is mostly used for disc players of the type in which a turntable rotates in a horizontal plane. Also, disc loading apparatus for disc players of the type in which a turntable rotates in a vertical plane has been also developed recently. Such latter apparatus, however, is complicated and expensive compared with the former apparatus because the latter apparatus has to move horizontally in holding discs vertically and to detach from discs after discs have been received by turntables.

It is an object of the present invention to provide a disc loading apparatus for disc-players of the type in which a turntable rotates in a vertical plane, in which damage to the disc due to slipping is prevented.

According to the present invention, there is provided an apparatus for loading a disc on a turntable, the apparatus comprising: said turntable, which is adapted for receiving said disc and is rotatable in a vertical plane; and means for carrying said disc between an inoperative position where said disc is ejected from said turntable and an operative position where said disc is loaded on said turntable, said carrying means including a first portion on which said disc leans, and a second portion which said disc comes on to, characterised in that the apparatus further comprises means for clamping said disc against said turntable in cooperation with said turntable when said carrying means is in said operative position and in that said second portion of said carrying means is movable between a first position, where said second portion of said carrying means holds said disc in a position in which said disc is able to meet with said turntable accurately, and a second position, where said second portion of said carrying means detaches from said disc in response to the disc being received on said turntable.

The present invention will now be described, by way of example, with reference to the accompanying drawings, in which:

Figure 1 is a perspective view of a digital audio disc-player;

Figure 2 is a perspective view of an automatic disc loading apparatus removed from the digital audio disc-player of Figure 1;

Figure 3 is a side elevation view of the automatic disc loading apparatus of Figure 2; and

Figures 4a, 4b and 4c are longitudinal sectional views of a disc carriage in Figure 2 or Figure 3, respectively in its inoperative position, just prior to its operative position and in its operative position.

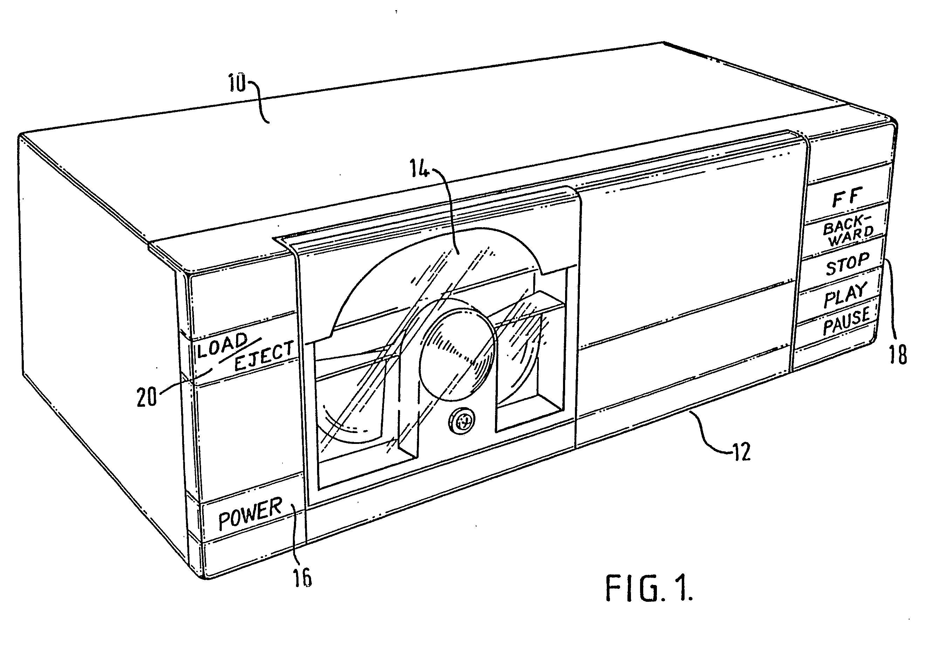

Figure 1 shows a perspective view of a digital audio disc-player in which an automatic disc loading apparatus according to an example of the present invention is used. As shown in Figure 1, a casing 10 of the disc-player has a control panel 12 and a disc drive section 14 with the automatic disc loading apparatus on its front side. Control panel 12 is provided with a power switch button 16, a disc drive control section 18 and a loading/ejecting button 20 for actuating the automatic disc loading apparatus to move its disc carriage to an operative or an inoperative position.

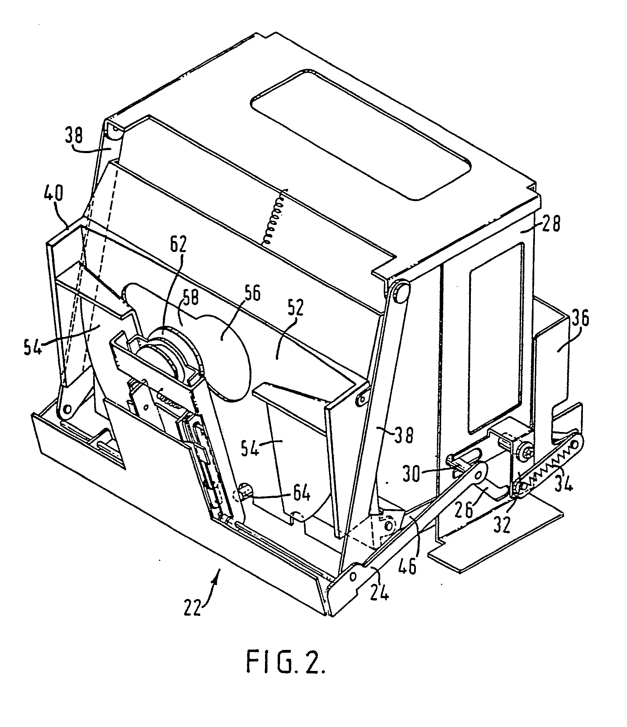

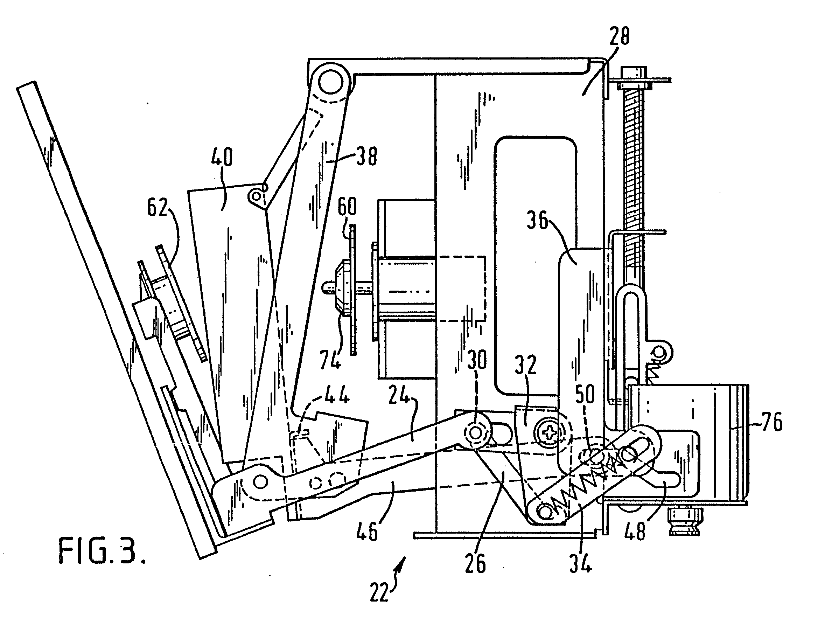

Figure 2 shows a perspective view of the automatic disc loading apparatus 22. In Figure 2, each of a pair of drive rods 24 (only one being visible) is engaged with a respective one of guide slits 26 (only one being visible), formed on respective sides of a chassis 28, through a respective one of pins 30 (only one being visible) mounted on respective ends of drive rods 24. Pins 30 are movable along guide slits 26 by means of drive levers 32 (only one being visible) pivoted on respective sides of chassis 28 near guide slits 26. Drive levers 32 have forked ends which engage with pins 30, 30 and other ends pivoted to respective ends of connecting rods 34 (only one being visible). Other ends of connecting rods 34 are pivoted on respective sides of a drive slider 36. Drive slider 36 is vertically slidable by means of a motor (see Figure 3). Figure 2 shows the condition in which drive slider 36 is in its lower position.

Drive rods 24 are pivoted at their other ends to respective ones of the free ends of support levers 38 which are pivoted at their other ends to respective sides of the upper portion of chassis 28.

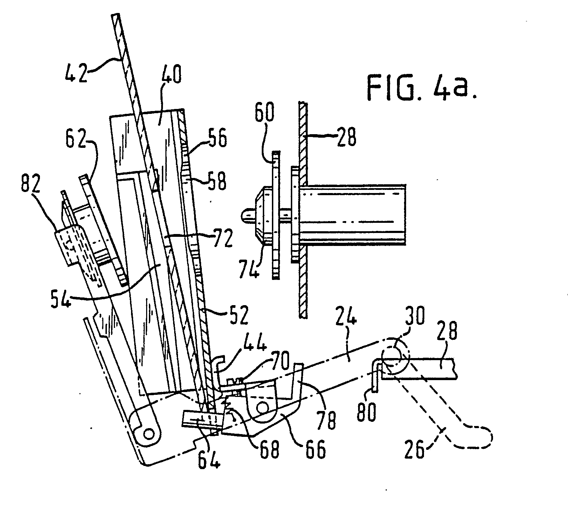

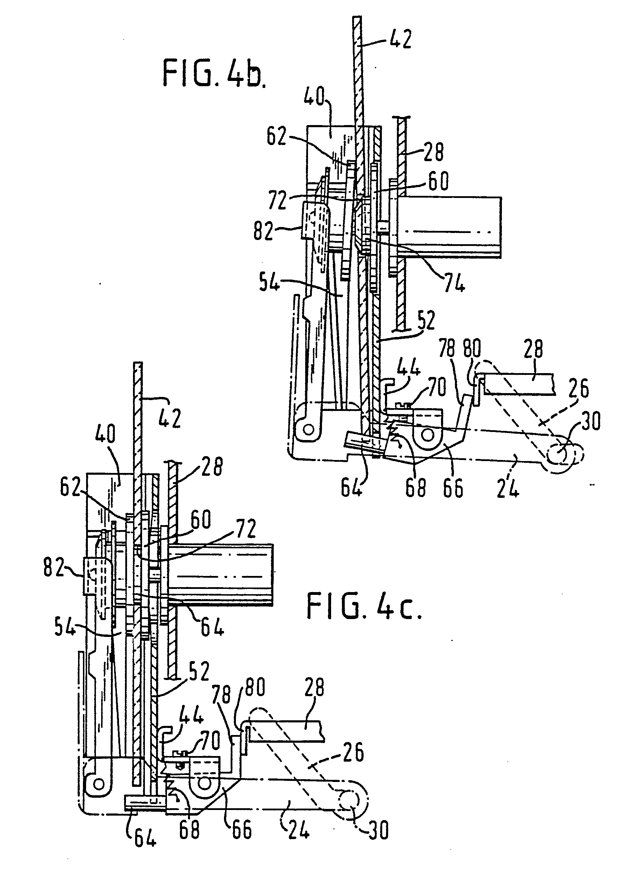

There is pivoted a disc carriage 40 to the pair of support levers 38 near their frame ends connecting to drive rods 24. Disc carriage 40 is adapted to receive a record disc 42 and to carry record disc 42 between an inoperative position and an operative position as described in detail hereinafter. Disc carriage 40 is further fixed at its lower portion to a beam 44 connecting respective ends of guide rods 46 as shown in Figure 3 (only one rod 46 being visible in Figure 3). The respective other ends of the guide rods 46 engage with respective ones of a second pair of guide slits 48 (only one being visible) formed on respective sides of chassis 28 through respective pins 50 (only one being visible) mounted on respective ends of guide rods 46. Pins 50 are movable along guide slits 48, when disc carriage 40 is driven by drive rods 24 between the inoperative and the operative positions. Thus, disc carriage 40 is controlled as to its posture or its inclination according to the shape of guide slits 48. When disc carriage 40 is driven to its inoperative position or its most outward position, disc carriage 40 is inclined forward as shown in Figure 3 for easy insertion or removal of record disc 42 into or out of disc carriage 40. When disc carriage 40 is driven to its operative position, disc carriage 40 rises vertically (see Figure 4).

Disc carriage 40 has a rear wall 52 and a pair of separated front walls 54 opposite rear wall 52. Rear wall 52 has a central round opening 56 and a side elongate opening 58 both connected together. Central round opening 56 allows a turntable 60 to penetrate into disc carriage 40 when disc carriage 40 is in its operative position. Side opening 58 allows a pick-up (not shown) to follow an information track of record disc 42, while the latter is rotated by turntable 60, in the radial direction of record disc 42. Front walls 54 are separated by a given distance from each other for allowing a disc clamper 62 to penetrate into the disc carriage 40 when the disc carriage is in the operative position. Then, disc clamper 62 is able to press record disc 42 against turntable 60 for clamping record disc 42 steadily on turntable 60.

As shown in Figure 2, there is provided a pair of hold pins 64 (only one being visible) at the lower portion of disc carriage 40. The pins of the pair of hold pins 64, are parallelly fixed on a hold lever 66. Hold lever 66 is rockably mounted on connecting beam 44 which is fixed on disc carriage 40 as shown in Figures 4a, 4b and 4c. When disc carriage 40 is in its inoperative position as shown in Figure 4a, the pair of hold pins 64 holds record disc 42 by engaging with the peripheral edge of record disc 42 inserted in disc carriage 40 while record disc 42 leans on the pair of front walls 54. Hold pins 64 are biased clockwise by a spring 68 between hold lever 66 and connecting beam 44 and stopped by an adjusting screw 70 mounted on connecting beam 44 for adjusting the height of stopped hold pins 64. By being held by hold pins 64 record disc 42 faces turntable 60 properly. That is, a centre hole 72 of record disc 42 is able to fit on a centre spindle 74 of turntable 60 when disc carriage 40 is driven to the operative position.

A loading movement of disc carriage 40 from its inoperative position is actuated by pressing loading/ejecting button 20 on control panel 12. Upon pressing button 20, drive slider 36 begins to go up from the position shown in Figure 3 by being driven by a motor 76. Driver slider 36 pulls up connecting rods 34 which rotate respective ones of drive levers 32 anti-clockwise. Driver levers 32 cause pins 30 of drive rods 24 to slide to the right along guide slits 26. Then disc carriage 40 pivoted on support levers 38 is driven to its operative position on changing its posture from the inclined state to the vertical state.

At the same time as disc carriage 40 is being driven to the operative position, disc clamper 62 is also driven in the same direction by drive rods 24. In the course of the movement, disc clamper 62 penetrates into disc carriage 40 and presses record disc 42 towards turntable 60 as shown in Figure 4b so that record disc 42 is detached from front walls 54. Then, centre hole 72 of record disc 40 begins to fit on centre spindle 74 of turntable 60 and protruding portion 78 of hold lever 66 meets with a stopper portion 80 formed on chassis 28.

Upon being further driven by drive rods 24, disc carriage 40 comes into its operative position as shown in Figure 4c. In the above state, disc clamper 62 clamps record disc 42 into co-operation with turntable 60. Hold lever 66 is rocked anti-clockwise against spring 68 by protruding portion 78 of hold lever 66 being prevented by stopper portion 80 of chassis 28. This causes hold pins 64 to be detached from record disc 42 received on turntable 60. Accordingly, the record disc is able to be rotated free from any portion of disc carriage 40. Also, disc clamper 62 is rotatably held by a clamper holder 82.

An ejecting movement of disc carriage 40 from its operative position is also actuated by pressing the loading/ejecting button 20. Upon pressing button 20, drive slider 36 begins to go down from its highest position by being driven by motor 76. Then, connecting rods 34, drive levers 32 and drive rods 24 move in opposite directions to their directions of movement during the loading movement of disc carriage 40. When disc carriage 40 begins to move to its inoperative position, hold lever 66 rotates clockwise as a result of spring 68 so that hold pins 64 meet the peripheral edge of record disc 42 still received on turntable 60 as shown in Figure 4b. In the course of further ejecting movement of disc carriage 40, disc clamper 62 comes out from disc carriage 40 and rear wall 52 of disc carriage 40 takes record disc 42 off turntable 60. Then, record disc 42 leans on front walls 54 on being held by hold pins 64 as shown in Figure 4a.

As seen from the above description, hold pins 64 change their states automatically according to the movement of disc carriage 40.

**Claims**

1. Apparatus (22) for loading a disc (42) on a turntable (60), the apparatus comprising: said turntable, which is adapted for receiving said disc and is rotatable in a vertical plane; and means for carrying said disc between an inoperative position where said disc is ejected from said turntable and an operative position where said disc is loaded on said turntable, said carrying means including a first portion (54) on which said disc leans, and a second portion (66, 64) which said disc comes on to, characterised in that the apparatus further comprises means (62) for clamping said disc (42) against said turntable (60) in co-operation with said turntable when said carrying means is in said operative position and in that said second portion (66, 64) of said carrying means is movable between a first position, where said second portion of said carrying means holds said disc (42) in a position in which said disc is able to meet with said turntable (60) accurately, and a second position, where said second portion of said carrying means detaches from said disc in response to the disc being received on said turntable.

2. Apparatus according to claim 1, characterised in that said second portion (66, 64) of said carrying means is rockably mounted on said carrying means.

3. Apparatus according to claim 2, characterised in that said second portion (66, 64) of said carrying means is rocked from the first position to the second position after said disc (42) has been received by said turntable (60).

4. Apparatus according to claim 3, characterised in that said second portion (66, 64) of said carrying means is rocked by said second portion of said carrying means running against a fixture (80).

## Patentansprüche

1. Apparat (22) zum Auflegen einer Platte (42) auf einen Plattenteller (60), mit dem Plattenteller, der zum Aufnehmen der Platte vorgesehen ist und in einer vertikalen Ebene drehbar ist, sowie einer Einrichtung zum Tragen der Platte zwischen einer Außerbetriebsstellung, in der die Platte von dem Plattenteller weg ausgeworfen ist, und einer Betriebsstellung, in der die Platte auf den Plattenteller aufgelegt ist, wobei die Trageinrichtung einen ersten Abschnitt (54) umfaßt, an welchem die Platte anlehnt, sowie einen zweiten Abschnitt (66, 64), auf welchen die Platte hinkommt, dadurch gekennzeichnet, daß der Apparat eine Einrichtung (62) umfaßt zum Anklemmen der Platte (42) an den Plattenteller (60) in Zusammenarbeit mit dem Plattenteller, wenn sich die Trageinrichtung in der Betriebsstellung befindet, und daß der zweite Abschnitt (66, 64) der Trageinrichtung verschiebbar ist zwischen einer ersten Stellung, in welcher der zweite Abschnitt der Trageinrichtung die Platte (42) in einer Stellung hält, in welcher die Platte in der Lage ist, genau mit dem Plattenteller (60) zusammenzutreffen, sowie einer zweiten Stellung, in welcher der zweite Abschnitt der Trageinrichtung sich in Reaktion auf das Aufnehmen der Platte auf dem Plattenteller von der Platte löst.

2. Apparat nach Anspruch 1, dadurch gekennzeichnet, daß der zweite Abschnitt (66, 64) der Trageinrichtung schwenkbar an der Trageinrichtung angebracht ist.

3. Apparat nach Anspruch 2, dadurch gekennzeichnet, daß der zweite Abschnitt (66, 64) der Trageinrichtung aus der ersten Stellung in die zweite Stellung geschwenkt wird, nachdem die Platte (42) von dem Plattenteller (60) aufgenommen worden ist.

4. Apparat nach Anspruch 3, dadurch gekennzeichnet, daß der zweite Abschnitt (66, 64) der Trageinrichtung dadurch geschwenkt wird, daß er gegen einen Anschlag (80) läuft.

## Revendications

1. Appareil (22) pour le chargement d'un disque (42) sur le plateau d'une platine (60), cet appareil comprenant ladite platine, qui est telle qu'elle peut recevoir ledit disque et tourner dans un plan vertical, et des moyens assurant le transport dudit disque entre une position de non-fonctionnement, dans laquelle ledit disque est éjecté de ladite platine, et une position de fonctionnement, dans laquelle ledit disque est chargé sur ladite platine, lesdits moyens de transport comprenant une première partie (54), sur laquelle ledit disque prend appui, et une deuxième partie (66, 64), sur laquelle ledit disque vient se placer, caractérisé en ce que l'appareil comprend également des moyens (62) assurant le serrage dudit disque (42) contre ladite platine (60) en coopération avec ladite platine lorsque lesdits moyens de transport sont dans ladite position de fonctionnement et en ce que ladite deuxième partie (66, 64) desdits moyens de transport peut se déplacer entre une première position, dans laquelle ladite deuxième partie desdits moyens de transport maintient ledit disque (42) dans une position dans laquelle ledit disque peut recontrer ladite platine (60) avec précision, et une deuxième position, dans laquelle ladite deuxième partie desdits moyens de transport se détache dudit disque en réponse au fait que le disque est arrivé sur ladite platine.

2. Appareil selon la revendication 1, caractérisé en ce que ladite deuxième partie (66, 64) desdits moyens de transport est montée de manière à pouvoir être tournée sur lesdits moyens de transport.

3. Appareils selon la revendication 2, caractérisée en ce que ladite deuxième partie (66, 64) desdits moyens de transport est tournée de la première position à la deuxième position après que ledit disque (42) ait été reçu par la platine (60).

4. Appareil selon la revendication 3, caractérisé en ce que ladite deuxième partie (66, 64) desdits moyens de transport est tournée par ladite seconde partie desdits moyens de transport se déplaçant contre une partie d'arrêt (80).

FIG. 1.

FIG. 2.

FIG.3.

FIG. 4a.

FIG. 4b.

FIG. 4c.